# EUROPEAN PATENT APPLICATION

(11) **EP 4 064 713 A1**
(43) Date of publication of application: **28.09.2022**
(21) Application number: 20910466.0
(22) Date of filing: 30.10.2020
(51) Int. Cl.: H04N 21/40, G06F 16/332

(54) **VOICE CONTROL METHOD AND APPARATUS, SERVER, TERMINAL DEVICE, AND STORAGE MEDIUM**

(30) Priority: 31.12.2019 CN 201911417229
(71) Applicant: Huawei Technologies Co., Ltd., Shenzhen, Guangdong 518129 (CN)
(72) Inventor: HE, Xionghui, Shenzhen, Guangdong 518129 (CN); YANG, Wei, Shenzhen, Guangdong 518129 (CN); ZHOU, Jianhui, Shenzhen, Guangdong 518129 (CN)
(74) Representative: Epping - Hermann - Fischer
(86) International application number: PCT/CN2020/125215
(87) International publication number: WO 2021/135604

(57) **Abstract**

This application is applicable to the field of terminal technologies, and provides a speech control method and apparatus, a server, a terminal device, and a storage medium. The method includes: receiving a speech instruction recognition result sent by a first terminal; performing semantic processing on the speech instruction recognition result to obtain operation information, where the operation information includes a first semantic instruction and a second semantic instruction; sending the first semantic instruction and the second semantic instruction to the first terminal, where the first semantic instruction is used to instruct the first terminal to send the second semantic instruction to a second terminal; and receiving an execution command fed back by the second terminal after the second terminal recognizes the second semantic instruction, and sending, according to the execution command, service logic corresponding to the second semantic instruction to the second terminal. According to this application, a problem that a system response time is prolonged and a dialog delay is increased because a dialog manager repeatedly processes a task instruction of a user in a plurality of phases during a joint dialog of a plurality of devices can be resolved.

## Description

This application claims priority to Chinese Patent Application No. 201911417229.4, filed with the China National Intellectual Property Administration on December 31, 2019 and entitled "SPEECH CONTROL METHOD AND APPARATUS, SERVER, TERMINAL DEVICE, AND STORAGE MEDIUM", which is incorporated herein by reference in its entirety.

### TECHNICAL FIELD

This application pertains to the field of terminal technologies, and in particular, to a speech control method and apparatus, a server, a terminal device, and a storage medium.

### BACKGROUND

In a human-machine natural language dialog system, a speech assistant is an intelligent application, and may be loaded on an intelligent terminal device such as a mobile phone, a television, a tablet, a computer, or a sound box. The speech assistant receives an audio signal of a user, performs speech recognition, and performs determining or makes a response. A dialog process including speech assistant wakeup, speech recognition, and responding requires cloud support from a speech database. A dialog manager (Dialog Manager, DM) may serve as a cloud service, and is responsible for maintaining and updating a process and a status of a dialog. An input of the dialog manager is an utterance (utterance) and a related context. After understanding the utterance, the dialog manager outputs a system response.

With the development of the internet and the internet of things, based on a network connection between a plurality of devices, a cross-device joint dialog may be performed by using the plurality of devices through mutual speech control, to form an all-scenario session scenario. For example, speech interaction with a mobile phone is performed, and a television is controlled by using the mobile phone to perform a corresponding task operation.

Currently, when the cross-device joint dialog is performed by using the plurality of devices, for the plurality of devices, the dialog manager repeatedly processes a task instruction of a user in a plurality of phases. This prolongs a response time of a system and increases a dialog delay.

### SUMMARY

Embodiments of this application provide a speech control method and apparatus, a server, a terminal device, and a storage medium, to resolve a problem that a system response time is prolonged and a dialog delay is increased because a dialog manager repeatedly processes a task instruction of a user in a plurality of phases during a joint dialog of a plurality of devices.

According to a first aspect, an embodiment of this application provides a speech control method, including:
receiving a speech instruction recognition result sent by a first terminal; performing semantic processing on the speech instruction recognition result, to obtain operation information, where the operation information includes a first semantic instruction and a second semantic instruction; sending the first semantic instruction and the second semantic instruction to the first terminal, where the first semantic instruction is used to instruct the first terminal to send the second semantic instruction to a second terminal; and receiving an execution command fed back by the second terminal after the second terminal recognizes the second semantic instruction, and sending, according to the execution command, service logic corresponding to the second semantic instruction to the second terminal. According to the speech control method provided in this application, a server is used as an execution body. The server performs semantic processing on the speech instruction recognition result by receiving the speech instruction recognition result sent by the first terminal, to obtain to-be-executed operation information in the speech instruction recognition result, and sends the operation information to the first terminal. The first terminal executes the first semantic instruction in the operation information, and sends the second semantic instruction in the operation information to the second terminal. After the second terminal recognizes the second semantic instruction, the server may directly receive the execution command fed back by the second terminal, invoke, according to the execution command, the service logic corresponding to the second semantic instruction, and send the service logic to the second terminal. In this way, a processing procedure for the second semantic instruction is omitted, a dialog delay is shortened, and a response time of a dialog system is improved.

In a possible implementation of the first aspect, the performing semantic processing on the speech instruction recognition result, to obtain operation information includes:
recognizing the speech instruction recognition result, to obtain a target intent and a target sub-intent of the speech instruction recognition result; pre-verifying the target sub-intent based on the target intent, to obtain response logic of the target intent and a pre-run result of the target sub-intent; and using the response logic as the first semantic instruction of the operation information, and using the target sub-intent and the pre-run result as the second semantic instruction of the operation information.

In this possible implementation, after the speech instruction recognition result (that is, text information corresponding to a speech instruction entered by a user) sent by the first terminal is received, semantic recognition is performed on the speech instruction recognition result, to obtain the target intent and the target sub-intent in the speech instruction recognition result. The response logic of the target intent and the pre-run result of the pre-verified target sub-intent is obtained by pre-verifying the target sub-intent based on the target intent, and when the response logic is sent to the first terminal as the first semantic instruction, the target sub-intent and the pre-run result are further sent to the first terminal as the second semantic instruction. The first semantic instruction is executed on the first terminal, and the second semantic instruction is sent to the second terminal, so as to provide an information basis for the dialog system, and improve the response speed of the dialog system.

In a possible implementation of the first aspect, the sending the first semantic instruction and the second semantic instruction to the first terminal includes:
sending the first semantic instruction and the second semantic instruction to the first terminal in a semantic representation form.

In a possible implementation of the first aspect, the sending, according to the execution command, service logic corresponding to the second semantic instruction to the second terminal includes:
parsing the pre-run result according to the execution command; and invoking the service logic based on the parsed pre-run result, and sending the service logic to the second terminal in a semantic representation form.

In this possible implementation, after the execution command sent by the second terminal is received, a corresponding command may be directly executed, to parse the pre-run result, corresponding service logic is directly invoked based on a result of parsing the pre-run result, and processes such as performing semantic processing on the target sub-intent and selecting a corresponding execution manner do not need to be performed, thereby shortening the response time of the dialog system.

According to a second aspect, an embodiment of this application provides a speech control method, including:
receiving a speech instruction entered by a user, and performing speech recognition on the speech instruction to obtain a speech instruction recognition result; sending the speech instruction recognition result to a server; receiving operation information fed back by the server after the server performs semantic processing on the speech instruction recognition result, where the operation information includes a first semantic instruction and a second semantic instruction; and executing the first semantic instruction, and sending the second semantic instruction to a second terminal, where the second semantic instruction is used to instruct the second terminal to send an execution command to the server and receive service logic that is fed back by the server and that is corresponding to the second semantic instruction.

According to the speech control method provided in this application, a first terminal is used as an execution body. After performing speech recognition on the speech instruction entered by the user, the first terminal sends the obtained speech instruction recognition result to the server, receives the operation information obtained after the server performs semantic processing on the speech instruction recognition result, executes the first semantic instruction in the operation information, and sends the second semantic instruction to the second terminal. The first terminal receives the first semantic instruction and the second semantic instruction that are fed back by the server in response to the speech instruction recognition result, executes the first semantic instruction, and sends the second semantic instruction to the second terminal, so that the second terminal directly invokes an execution interface of the server according to the second semantic instruction, sends the execution command to the server, and receives the service logic that is fed back by the server and that is corresponding to the second semantic instruction. In this way, an information basis is provided for a dialog system to further respond to the second speech instruction, and a processing procedure for the second semantic instruction is omitted, so that a response time of the dialog system can be shortened.

In a possible implementation of the second aspect, the receiving operation information fed back by the server after the server performs semantic processing on the speech instruction recognition result includes:
receiving response logic fed back by the server for a target intent in the speech instruction recognition result, and receiving a pre-run result fed back by the server for a target sub-intent in the speech instruction recognition result.

In a possible implementation of the second aspect, the first semantic instruction is response logic fed back by the server for a target intent in the speech instruction recognition result, and the second semantic instruction is a pre-run result fed back by the server for a target sub-intent in the speech instruction recognition result and the target sub-intent; and
correspondingly, the executing the first semantic instruction, and sending the second semantic instruction to a second terminal includes:
executing the response logic fed back by the server, and sending, to the second terminal, the target sub-intent and the pre-run result that are fed back by the server.

In this possible implementation, when the response logic fed back by the server for the target intent in the speech instruction recognition result is received, the pre-run result fed back by the server for the target sub-intent in the speech instruction recognition result is also received, and the pre-run result of the target sub-intent is used as intermediate data to be transmitted to the second terminal, so as to provide a data basis for the second terminal. By executing the response logic fed back by the server, when the target sub-intent is sent to the second terminal, the pre-run result is also sent to the second terminal, so that the second terminal may directly invoke an execution interface of the server based on the pre-run result, and there is no need to upload the target sub-intent to the server for processes such as semantic processing and determining execution, thereby reducing a data processing procedure and shortening the response time of the dialog system.

According to a third aspect, an embodiment of this application provides a speech control method, including:
receiving a second semantic instruction sent by a first terminal when the first terminal executes a first semantic instruction, where the first semantic instruction and the second semantic instruction are operation information that is fed back by a server based on a speech instruction recognition result and that is received by the first terminal after the first terminal sends the speech instruction recognition result to the server; recognizing the second semantic instruction, to obtain a recognition result of the second semantic instruction; sending an execution command to the server based on the recognition result; and receiving service logic that is fed back by the server based on the execution command and that is corresponding to the second semantic instruction, and executing the service logic.

According to the speech control method provided in this application, a second terminal is used as an execution body. The second terminal recognizes the received second semantic instruction, and directly invokes an execution interface of the server based on the recognition result, to instruct the server to feed back service logic corresponding to the second semantic instruction, and there is no need to perform semantic processing on the second semantic instruction by using the server. This reduces a data processing procedure, improves a response speed of the second terminal, and shortens a delay of a session system.

In a possible implementation of the third aspect, the operation information includes response logic fed back by the server for a target intent in the speech instruction recognition result, and a pre-run result fed back by the server for a target sub-intent in the speech instruction recognition result; and
correspondingly, the receiving a second semantic instruction sent by a first terminal when the first terminal executes a first semantic instruction includes: receiving the target sub-intent and the pre-run result that are sent by the first terminal when the first terminal executes the response logic.

In a possible implementation of the third aspect, the second semantic instruction includes a pre-run result obtained by the server by pre-verifying a target sub-intent in the speech instruction recognition result; and
correspondingly, the recognizing the second semantic instruction, to obtain a recognition result of the second semantic instruction includes: recognizing the second semantic instruction, to obtain the pre-run result of the target sub-intent.

In a possible implementation of the third aspect, the sending an execution command to the server based on the recognition result includes:
sending the execution command corresponding to the pre-run result to the server based on the recognition result.

For example, the pre-run result includes a skill identifier, an intent identifier, and a slot list, where a slot includes a slot name, a slot type, and a slot value.

It should be understood that the server, the first terminal, and the second terminal may be interconnected with each other in a networked state, and implement data transmission with each other by using a data transmission protocol. Alternatively, the three terminals are separately connected to a cloud-side service to exchange data.

For example, the server, the first terminal, and the second terminal may be connected to each other through mutual confirmation of addresses and interfaces between the terminals by using a wireless Wi-Fi or a cellular network, to form a device circle of a dialog system, and implement mutual control by using a speech instruction.

For example, the server sends the first semantic instruction in the operation information to the first terminal, and directly sends the second semantic instruction to the second terminal.

According to a fourth aspect, an embodiment of this application provides a speech control apparatus, including:
a first receiving module, configured to receive a speech instruction recognition result sent by a first terminal;
a semantic processing module, configured to perform semantic processing on the speech instruction recognition result, to obtain operation information, where the operation information includes a first semantic instruction and a second semantic instruction;
a first sending module, configured to send the first semantic instruction and the second semantic instruction to the first terminal, where the first semantic instruction is used to instruct the first terminal to send the second semantic instruction to a second terminal; and
a command execution module, configured to: receive an execution command fed back by the second terminal after the second terminal recognizes the second semantic instruction, and send, according to the execution command, service logic corresponding to the second semantic instruction to the second terminal.

In a possible implementation, the semantic processing module includes:
a semantic recognition submodule, configured to recognize the speech instruction recognition result, to obtain a target intent and a target sub-intent of the speech instruction recognition result; and
a task execution submodule, configured to: pre-verify the target sub-intent based on the target intent, to obtain response logic of the target intent and a pre-run result of the target sub-intent; and use the response logic as the first semantic instruction of the operation information, and use the target sub-intent and the pre-run result as the second semantic instruction of the operation information.

In a possible implementation, the first sending module is further configured to send the first semantic instruction and the second semantic instruction to the first terminal in a semantic representation form.

In a possible implementation, the first sending module includes:
a first submodule, configured to parse the pre-run result according to the execution command; and
a second word module, configured to invoke the service logic based on the parsed pre-run result, and send the service logic to the second terminal in the semantic representation form.

According to a fifth aspect, an embodiment of this application provides a speech control apparatus, including:
a speech recognition module, configured to: receive a speech instruction entered by a user, and perform speech recognition on the speech instruction to obtain a speech instruction recognition result;
a second sending module, configured to send the speech instruction recognition result to a server;
a second receiving module, configured to receive operation information fed back by the server after the server performs semantic processing on the speech instruction recognition result, where the operation information includes a first semantic instruction and a second semantic instruction; and
an instruction execution module, configured to: execute the first semantic instruction; and send the second semantic instruction to a second terminal, where the second semantic instruction is used to instruct the second terminal to send an execution command to the server and receive service logic that is fed back by the server and that is corresponding to the second semantic instruction.

In a possible implementation, the second receiving module is further configured to receive response logic fed back by the server for a target intent in the speech instruction recognition result, and receive a pre-run result fed back by the server for a target sub-intent in the speech instruction recognition result.

In a possible implementation, the first semantic instruction is the response logic fed back by the server for the target intent in the speech instruction recognition result, and the second semantic instruction is the pre-run result fed back by the server for the target sub-intent in the speech instruction recognition result and the target sub-intent. The instruction execution module is further configured to execute the response logic fed back by the server, and send, to the second terminal, the target sub-intent and the pre-run result that are fed back by the server.

According to a sixth aspect, an embodiment of this application provides a speech control apparatus, including:
a third receiving module, configured to receive a second semantic instruction sent by a first terminal when the first terminal executes a first semantic instruction, where the first semantic instruction and the second semantic instruction are operation information that is fed back by a server based on a speech instruction recognition result and that is received by the first terminal after the first terminal sends the speech instruction recognition result to the server;
an instruction recognition module, configured to recognize the second semantic instruction, to obtain a recognition result of the second semantic instruction;
a third sending module, configured to send an execution command to the server based on the recognition result; and
a service execution module, configured to: receive service logic that is fed back by the server based on the execution command and that is corresponding to the second semantic instruction, and execute the service logic.

In a possible implementation, the operation information includes response logic fed back by the server for a target intent in the speech instruction recognition result, and a pre-run result fed back by the server for a target sub-intent in the speech instruction recognition result. The third receiving module is further configured to receive the target sub-intent and the pre-run result that are sent by the first terminal when the first terminal executes the response logic.

In a possible implementation, the second semantic instruction includes a pre-run result obtained by the server by pre-verifying a target sub-intent in the speech instruction recognition result. The instruction recognition module is further configured to recognize the second semantic instruction, to obtain the pre-run result of the target sub-intent.

In a possible implementation, the third sending module is further configured to send the execution command corresponding to the pre-run result to the server based on the recognition result.

According to a seventh aspect, an embodiment of this application provides a server. The server includes a memory, a processor, a natural language understanding module, and a dialog management module. The memory is configured to store a computer program, the computer program includes instructions, and when the instructions are executed by the server, the server is enabled to perform the speech control method.

According to an eighth aspect, an embodiment of this application provides a terminal device. The terminal device includes a memory, a processor, and a speech assistant. The memory is configured to store a computer program, the computer program includes instructions, and when the instructions are executed by the terminal device, the terminal device is enabled to perform the speech control method.

According to a ninth aspect, an embodiment of this application provides a terminal device. The terminal device includes a memory and a processor. The memory is configured to store a computer program, the computer program includes instructions, and when the instructions are executed by the terminal device, the terminal device is enabled to perform the speech control method.

According to a tenth aspect, an embodiment of this application provides a computer storage medium. The computer-readable storage medium stores a computer program, the computer program includes instructions, and when the instructions are run on a terminal device, the terminal device is enabled to perform the speech control method. According to an eleventh aspect, an embodiment of this application provides a computer program product including instructions. When the computer program product is run on a terminal device, the terminal device is enabled to perform the speech control method according to any one of the possible implementations of the first aspect.

It may be understood that for beneficial effects of the second aspect to the eleventh aspect, refer to technical effects of the first aspect or the implementations of the first aspect. Details are not described herein again.

Compared with the current technology, this embodiment of this application has the following beneficial effect: According to the speech control method provided in this application, semantic processing is performed on the speech instruction recognition result by receiving the speech instruction recognition result sent by the first terminal, to obtain the to-be-executed operation information in the speech instruction recognition result, and the operation information is sent to the first terminal. The first terminal executes the first semantic instruction in the operation information, and sends the second semantic instruction in the operation information to the second terminal. After recognizing the second semantic instruction, the second terminal may directly receive the execution command fed back by the second terminal, invoke, according to the execution command, the service logic corresponding to the second semantic instruction, and send the service logic to the second terminal. In this embodiment, after receiving the second semantic instruction, the second terminal may directly receive the execution command that is fed back by the second terminal based on task information included in the second semantic instruction, and does not need to perform semantic processing again on the second semantic instruction received by the second terminal. Corresponding service logic may be invoked based on the execution command that is fed back, and the execution interface is used to send the execution command to the second terminal. In this way, the processing procedure for the second semantic instruction is omitted, the dialog delay is shortened, and the response time of the dialog system is improved.

### BRIEF DESCRIPTION OF DRAWINGS

FIG. 1 is a schematic diagram of a system architecture of multi-device interconnection speech control according to an embodiment of this application;
FIG. 2 is a schematic diagram of a system architecture of multi-device interconnection speech control according to another embodiment of this application;
FIG. 3 is a schematic flowchart of a speech control method according to an embodiment of this application;
FIG. 4 is a schematic flowchart of a speech control method according to another embodiment of this application;
FIG. 5 is a schematic flowchart of a speech control method according to another embodiment of this application;
FIG. 6 is a schematic diagram of device interaction of a speech control method according to an embodiment of this application;
FIG. 7 is a schematic diagram of an application scenario of a speech control method according to an embodiment of this application;
FIG. 8 is a schematic diagram of an application scenario of a speech control method according to another embodiment of this application;
FIG. 9 is a schematic diagram of an application scenario of a speech control method according to another embodiment of this application;
FIG. 10 is a schematic structural diagram of a speech control apparatus according to an embodiment of this application;
FIG. 11 is a schematic structural diagram of a speech control apparatus according to another embodiment of this application;
FIG. 12 is a schematic structural diagram of a speech control apparatus according to another embodiment of this application;
FIG. 13 is a schematic structural diagram of a server according to an embodiment of this application;
FIG. 14 is a schematic structural diagram of a terminal device according to an embodiment of this application; and
FIG. 15 is a schematic structural diagram of a terminal device according to another embodiment of this application.

### DESCRIPTION OF EMBODIMENTS

In the following description, to illustrate rather than limit, specific details such as a particular system structure, and a technology are provided to make a thorough understanding of the embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the terms "comprises" and/or "comprising" indicate presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if' may be interpreted as "when" or "once" or "in response to determining" or "in response to detecting". Similarly, according to the context, the phrase "if it is determined that" or "if (a described condition or event) is detected" may be interpreted as a meaning of "once it is determined that" or "in response to determining" or "once (a described condition or event) is detected" or "in response to detecting (a described condition or event)".

In addition, in the specification and the appended claims of this application, the terms "first", "second", "third", and the like are merely used for distinguishing description, and shall not be understood as an indication or implication of relative importance.

Reference to "an embodiment", "some embodiments", or the like described in the specification of this application indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized in other ways. The terms "include", "comprise", "have", and their variants all mean "include but are not limited to", unless otherwise specifically emphasized in other ways.

A speech control method provided in this application may be applied to an all-scenario session scenario in which a plurality of devices perform cross-device joint dialogs and control each other by using speeches. For example, speech interaction with a mobile phone is performed, and a television is controlled by using the mobile phone to execute corresponding service logic.

Currently, in the all-scenario session scenario in which the plurality of devices perform mutual speech control, each device in the scenario needs to have a networking function. The devices may communicate with each other in a wired or wireless manner through mutual confirmation of addresses and interfaces, or each device accesses a cloud-side service and implements communication by using the cloud-side service. The wireless manner includes the internet, a Wi-Fi network, or a mobile network. The mobile network may include existing 2G (for example, a global system for mobile communications (English: Global System for Mobile Communication, GSM)), 3G (for example, a universal mobile telecommunications system (English: Universal Mobile Telecommunications System, UMTS)), 4G (for example, FDD LTE and TDD LTE), 4.5G, 5G, and the like. The devices use a transmission protocol, for example, a communications protocol such as http, to transmit data. The devices each may be a mobile phone, a television, a tablet, a sound box, a computer, or the like, and the devices may have functions such as networking and a speech assistant. In an actual application scenario, when a plurality of devices perform cross-device joint dialogs and control each other by using speeches, a dialog manager (Dialog Manager, DM) needs to serve as a cloud service to maintain and update a process and a status of the dialog, input an utterance (utterance) corresponding to a speech instruction, and output a system response by understanding the utterance with reference to a related context.

The dialog manager (Dialog Manager, DM) obtains, based on semantics of the input speech instruction, a task corresponding to the speech instruction, determines information required by the task, then connects to a service platform to complete the task, or requests to further input more speech instruction information, or obtains service logic corresponding to the task on the service platform, and finally returns an execution result to a user.

DM with different functions may be interconnected to different service platforms. The service platform may be a service platform preset by a system, or may be a third-party platform. For example, semantics of listening to a song or an e-book may be interconnected to a platform such as NetEase cloud music or Himalaya, and semantics of watching a video may be interconnected to a third-party platform such as iQIYI or Bilibili.

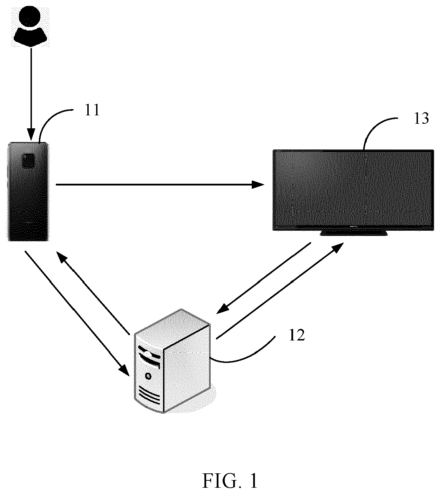

FIG. 1 is a schematic diagram of a system architecture of multi-device interconnection speech control according to an embodiment of this application. When devices are networked or mutually determine addresses and interfaces, mutual control is implemented by using speeches. A first terminal 11 is provided with a speech assistant, and may receive, by using a microphone, an audio signal entered by a user. The first terminal 11 performs speech recognition ASR on the received audio signal to obtain text information corresponding to the audio signal. The first terminal 11 transmits the text information to a server 12. The server 12 may be a dialog management server, and performs semantic recognition on the received text information through natural language understanding (Natural Language Understanding, NLU), to obtain a target intent and a target sub-intent that are obtained after the semantic recognition. The server 12 performs service interconnection based on a semantic representation that is output after the semantic recognition, obtains service logic corresponding to the semantic representation, and finally returns an execution result to the first terminal 11. After receiving the execution result, the first terminal 11 sends the execution result to a second terminal 13. Alternatively, the server 12 directly sends the execution result to the second terminal 13. The second terminal 13 recognizes the received execution result to obtain a pre-run result of the target sub-intent in the execution result, and directly sends an execution command to the server 12 based on the pre-run result, to invoke an execution interface of the server 12. After receiving the execution command, the server 12 interconnects to the service logic based on the pre-run result, and feeds back the service logic to the second terminal 13. Finally, the second terminal 12 executes the corresponding service logic.

As shown in FIG. 1, the first terminal 11 may be a mobile phone. The server 12 may be a dialog management cloud service, or may be a local physical server. The second terminal 13 may be a television. Through speech interaction with the mobile phone and dialog management by the server, the television is controlled by using the mobile phone. For example, if a user says to the mobile phone that: Play the movie Ne Zha on the television, the mobile phone displays: Switching to the television for you (it is pre-verified, in a process of interacting with the dialog management server, that the television supports playing), and finally, the television displays: The movie Ne Zha is being played (actually the playing starts).

It should be noted that a multi-device interconnection speech control system may include a plurality of devices, and the implemented speech control may include any type of speech instruction for cross-device control, for example, an instruction for controlling playing of a television through cross-device control, an instruction for controlling an air conditioner to adjust temperature through cross-device control, or an instruction for controlling a cooking mode of a cooking tool through cross-device control.

In a human-machine natural language dialog system, a dialog manager is responsible for controlling a process and a status of a dialog, and outputs a system response after multi-channel parallel skill discovery, pre-run, sorting and selection, execution, and session connection by inputting an utterance and a related context.

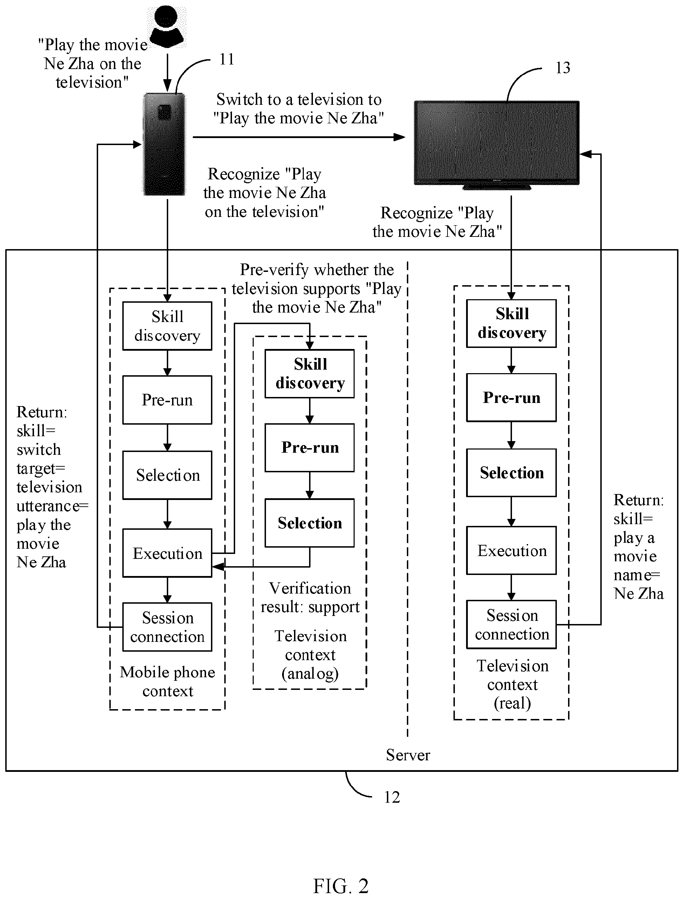

FIG. 2 is a schematic diagram of a system architecture of multi-device interconnection speech control according to another embodiment of this application. Currently, in an all-scenario session process in which mutual control is performed by using speeches, a first terminal 11 receives a speech instruction entered by a user, for example, "Play the movie Ne Zha on the television". The first terminal 11 performs speech recognition on the speech instruction to obtain a speech instruction recognition result, that is, text information corresponding to the speech instruction. The first terminal 11 sends the speech instruction recognition result to a server 12, and the server performs parallel processing on the speech instruction recognition result in a plurality of phases.

As shown in FIG. 2, an example in which the first terminal is a mobile phone, a second terminal is a television, and the server is a dialog management server is used. The parallel processing in the plurality of phases includes: skill discovery, pre-run, selection, execution, and session connection based on a mobile phone context, and skill discovery, pre-run, and selection based on an analog television context. The dialog management server performs semantic recognition on the speech instruction recognition result with reference to the mobile phone context, searches for a plurality of skills corresponding to semantics, performs pre-run for each skill, summarizes pre-run results, filters out a result of failed pre-run, sorts results of successful pre-run according to a sorting rule or a sorting model (such as LambdaMART or a sorting model commonly used by a search engine), selects a pre-run result ranked in the first place as an only optimal skill, then performs execution based on the pre-run result, and finally performs session connection to return an execution result to a client (namely, the mobile phone).

For example, when the user says "Play the movie Ne Zha on the television" to the mobile phone, the dialog management server performs semantic recognition based on the mobile phone context to determine that the skill is a "switch" skill, and when the "switch" skill is executed, it is required to pre-verify whether the television supports "Play the movie Ne Zha". A processing procedure for skill discovery, pre-run, and selection is performed based on an analog television context recognition utterance "Play the movie Ne Zha" in the dialog management server. If a skill can be selected, it indicates that the television supports "Play the movie Ne Zha". Otherwise, it indicates that the television does not support the task, and a corresponding semantic processing result needs to be returned or further confirmation with the user is required.

When a verification result is "support", the dialog management server returns response logic obtained after semantic processing, that is, returns skill=switch, target=television, and utterance=play the movie Ne Zha to the mobile phone. When receiving the response logic of "switch", the mobile phone executes switching logic: sending "Play the movie Ne Zha" to the television. After receiving "Play the movie Ne Zha", the television recognizes text information of "Play the movie Ne Zha", invokes the dialog management server again, performs semantic processing: skill discovery, pre-run, and selection on "Play the movie Ne Zha" based on a real television context, then invokes an execution interface of the server based on a selected pre-run result, and sends an execution command to the server. The server interconnects to service logic of "Play the movie Ne Zha" according to the execution command, feeds back the service logic to the television, and returns skill=play a movie, and name=Ne Zha. The television plays the movie.

Currently, in the dialog management server, context information of an analog target terminal (a television) may be set to pre-verify whether a target terminal supports an intent of a current utterance. Only a verification result is obtained, but a task is not executed.

It can be learned from the foregoing process that, in a semantic processing process performed by the dialog management server relative to the mobile phone and the television, repeated processing of the procedure "skill discovery, pre-run, and selection" is performed for "Play the movie Ne Zha". Consequently, a relatively long delay is caused in a speech interaction process of a dialog system, a response time of the system is prolonged, running load of the dialog management server is increased, and user experience is relatively poor.

Based on the foregoing problem, according to the speech control method provided in this application, in an all-scenario multi-device cooperative dialog, by controlling information exchange between devices, when device switching is recognized, a pre-run result of pre-verification for a target device is used as intermediate data, and an intermediate device transmits the intermediate data to the target terminal, or the intermediate data is directly transmitted to the target terminal through a dialog management server.

For example, in the system architecture of multi-device interconnection speech control shown in FIG. 1, the first terminal receives a speech instruction entered by a user, and the first terminal performs speech recognition on the speech instruction, and sends a recognized speech instruction recognition result to the server. After receiving the speech instruction recognition result, the server processes the speech instruction recognition result in a plurality of phases. The processing mainly includes task recognition, task execution, and a result reply. Operation information obtained by processing the speech instruction recognition result is used as the result reply, and is fed back to the first terminal. The operation information includes response logic based on a first terminal context and a pre-run result based on an analog second terminal context. The pre-run result and the response logic of the first terminal are both sent to the first terminal. Alternatively, the response logic is sent to the first terminal, and the pre-run result is directly sent to the second terminal. When the first terminal receives both the response logic and the pre-run result fed back by the server, the first terminal invokes the second terminal, and sends the pre-run result to the second terminal. The second terminal directly invokes an execution interface of the server based on the pre-run result, and the second terminal sends an execution command to the server. The server interconnects to a service platform according to the execution command, invokes corresponding service logic, and feeds back the service logic to the second terminal. The second terminal executes the corresponding service logic.

When the server feeds back the response logic to the first terminal, and directly sends the pre-run result to the second terminal, the first terminal may respond to the user that switching is being performed or a command is being executed. The server invokes the second terminal, and directly sends the pre-run result to the second terminal. The second terminal recognizes the pre-run result, directly invokes an execution interface of the server, and sends an execution command to the server. The server interconnects to a service platform according to the instruction command, invokes corresponding service logic, and feeds back the service logic to the second terminal. The second terminal executes the service logic. In this way, a repeated processing process performed by the server on an utterance is omitted, thereby improving a response speed of the target device, shortening a response time of the dialog system, and reducing a delay of human-machine speech interaction.

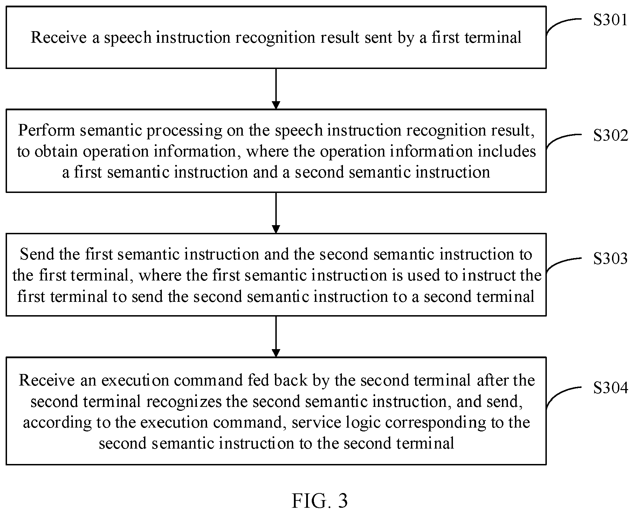

FIG. 3 is a schematic flowchart of a speech control method according to an embodiment of this application. In an embodiment of the speech control method provided in this application, a server in FIG. 1 is used as an execution body. The server may be a cloud service or a local physical server for dialog management. This is not specifically limited herein. A specific implementation principle of the method includes the following steps.

Step S301: Receive a speech instruction recognition result sent by a first terminal.

In this embodiment, the server receives the speech instruction recognition result sent by the first terminal. The speech instruction recognition result is text information that is of a speech instruction and that is obtained by performing speech recognition on audio information of the speech instruction after the first terminal receives the speech instruction entered by a user, and the text information of the speech instruction is used as the speech instruction recognition result. The first terminal may be a terminal device on which a speech assistant is disposed, for example, a mobile phone, a computer, a tablet, a television, or a sound box. The audio information of the user is received by using a microphone of the first terminal. For example, the user says "Play the movie Ne Zha on the television" to a speech assistant of the mobile phone.

Specifically, after recognizing the speech instruction, the first terminal obtains the text information corresponding to the speech instruction, and transmits the text information to the server by using wireless Wi-Fi or a cellular mobile network. The server performs semantic recognition and processing.

The speech instruction may be a speech control instruction of a task type, and the speech instruction recognition result may include a target intent and a target sub-intent. For example, in "Play the movie Ne Zha on the television" or "Play a song of Beatles on the sound box", "on the television" or "on the sound box" corresponds to the target intent, and "Play the movie Ne Zha" or "Play a song of Beatles" may be correspondingly recognized as the target sub-intent.

It should be noted that, in a state in which both the server and the first terminal are connected to a network, the first terminal and the server may implement networking communication through mutual confirmation of addresses and interfaces, or may communicate with each other through a gateway or a route. Information transmission between the server and the first terminal conforms to a data transmission protocol, for example, the HTTP protocol.

Step S302: Perform semantic processing on the speech instruction recognition result, to obtain operation information, where the operation information includes a first semantic instruction and a second semantic instruction.

In this embodiment, as a dialog management system in a speech interaction process, the server may perform semantic recognition on the speech instruction recognition result through natural language understanding, to obtain a semantic representation that can be recognized by a machine. The server obtains the target intent and the target sub-intent in the speech instruction recognition result based on the semantic representation, and performs parallel processing in a plurality of phases to obtain the operation information for replying to the first terminal, so as to respond to the speech instruction recognition result.

The operation information may be an execution result of implementing the target intent in the speech instruction recognition result by the server, that is, response logic, for example, service logic invoked based on the speech instruction recognition result; or may be further requiring a client to input more information to implement the target intent.

For example, when the server receives "Play the movie Ne Zha on the television" sent by the mobile phone, the server performs processes such as skill discovery, pre-run, and selection based on a specified mobile phone context, and determines a "switch" skill. Based on semantic recognition, it may be determined that the target intent is "switch", and the target sub-intent is "Play the movie Ne Zha". Based on the semantic recognition, if a target device television needs to be switched to, whether the television supports "Play the movie Ne Zha" is pre-verified, so as to avoid that the television displays "not support" or "cannot understand" after switching to the television is performed. Analog television context information is set on the server, and includes a domain and a target object in a current dialog, and slot information, a sequence, and a pronoun mentioned in a previous dialog. Based on the analog television context information, the utterance "Play the movie Ne Zha" is pre-verified, that is, a processing procedure for skill discovery, pre-run, and skill selection and determining is performed. If a playing skill can be determined, it indicates that the television supports the target sub-intent. In this case, the server generates corresponding operation information based on a "switch" action to be performed by the mobile phone and a pre-run result of the pre-verification process, performs session connection, and replies to the mobile phone.

Specifically, when a cross-device control" switch" action is determined based on the mobile phone context information, the operation information may be divided into an operation instruction that needs to be executed by the mobile phone currently and an operation instruction that needs to be executed by the target device currently, that is, the operation information for replying to the mobile phone is divided into the first semantic instruction and the second semantic instruction. The first semantic instruction corresponds to reply logic responding to the current mobile phone, and corresponds to the target intent in the speech instruction recognition result. The second semantic instruction is logic that needs to be executed by the target device, and corresponds to the target sub-intent in the speech instruction recognition result.

It should be noted that in a process of recognizing a task, executing the task, and replying a result based on the speech instruction recognition result, the dialog management server may further dispose a plurality of slots to perform a plurality of rounds of speech interaction with the client, to clarify the target intent or the target sub-intent. For example, after receiving an utterance "Play on the television" sent by the mobile phone, the server may return a question "What to play", and then receives "the movie Ne Zha". Through a plurality of rounds of dialogs, a task of a target utterance is clarified, so that a dialog system can accurately reply or respond.

In a possible implementation, the performing semantic processing on the speech instruction recognition result, to obtain operation information includes:
3.1: Recognize the speech instruction recognition result, to obtain the target intent and the target sub-intent of the speech instruction recognition result.
3.2: Pre-verify the target sub-intent based on the target intent, to obtain the response logic of the target intent and a pre-run result of the target sub-intent.
3.3: Use the response logic as the first semantic instruction of the operation information, and use the target sub-intent and the pre-run result as the second semantic instruction of the operation information.

In this embodiment, the server performs semantic processing on the speech instruction recognition result, and recognizes semantic information in the text information of the speech instruction recognition result, to obtain the target intent and the target sub-intent of the speech instruction recognition result. The target intent may be an operation that needs to be performed by the first terminal and that is determined based on the speech instruction recognition result, and the target sub-intent may be an operation that needs to be performed to control the target device across devices and that is determined based on the speech instruction recognition result. The server determines the target intent of the speech instruction recognition result based on the mobile phone context, for example, determines a "switch" intent. The server performs pre-verification and pre-run on the target sub-intent, to determine whether the target terminal supports execution of the target sub-intent. Through an execution process, the response logic {skill=switch, target=television, utterance=play the movie Ne Zha} of the target intent, and a verification result and the pre-run result of the target sub-intent are determined. The verification result is used to indicate whether the target terminal supports execution of the target sub-intent, and the pre-run result is used to indicate a processing result obtained by performing simulation run of the target sub-intent.

Specifically, the response logic and the pre-run result may include a skill identifier, an intent identifier, and slot information. The skill identifier determines a skill. The skill is a set of capabilities and can support a plurality of intents. For example, a weather skill supports an intent of querying weather and PM2.5. The intent identifier determines a unique intent in the skill. The slot information is a list of parameters required for intent execution. There may be any quantity of parameters in the slot information, for example, there may be zero or a plurality of parameters. The slot information includes a slot name, a slot type, and a slot value. The slot name determines a parameter name of the slot, and the slot type determines a type of the slot parameter, such as a date, a number, or a character string. The slot value is a parameter value.

For example, the server uses the response logic and the pre-run result as a result reply, uses the response logic as the first semantic instruction of the operation information, and uses the utterance corresponding to the target sub-intent and the running result as the second semantic instruction of the operation information.

Step S303: Send the first semantic instruction and the second semantic instruction to the first terminal, where the first semantic instruction is used to instruct the first terminal to send the second semantic instruction to a second terminal. In this embodiment, in a wired or wireless manner, the server uses the first semantic instruction and the second semantic instruction as the result reply, and sends both the first semantic instruction and the second semantic instruction to the first terminal.

Specifically, the first semantic instruction includes the response logic for replying to the first terminal. For example, in the foregoing scenario, the response logic corresponding to the first terminal may be {skill=switch, target=television, utterance=play the movie Ne Zha}. The second semantic instruction includes the utterance corresponding to the target sub-intent and the pre-run result of the target sub-intent in the speech instruction recognition result. For example, the pre-run result may be {skill=play a movie, name=Ne Zha}. The first terminal executes the first semantic instruction, and sends the second semantic instruction to the second terminal. The second terminal recognizes the second semantic instruction, and may further recognize the pre-run result of the target sub-intent while recognizing the target sub-intent from the second semantic instruction. The server does not need to perform the processing procedure for skill discovery, pre-run, and selection on the utterance of the target sub-intent.

Alternatively, in another possible implementation, the server may send the first semantic instruction to the first terminal in a wired or wireless manner, and directly send the second semantic instruction to the second terminal (namely, the target terminal) in a wired or wireless manner. The first terminal executes the switching skill, and determines to switch to the second terminal (the target terminal). The second terminal (the target terminal) directly obtains the second semantic instruction sent by the server. The second semantic instruction includes the pre-run result of the target sub-intent. The second terminal may recognize the pre-run result in the second semantic instruction, directly send an execution command to the server based on the pre-run result, and invoke an execution interface of the server. The server invokes, according to the execution command, service logic corresponding to the target sub-intent, so that a processing process in which the server performs skill discovery, pre-run, and selection again on the utterance of the target sub-intent in the second semantic instruction is omitted, thereby improving a response speed of the dialog system.

It should be noted that, in a state in which the server, the first terminal, and the second terminal are all connected to a network, the server and the first terminal, the server and the second terminal, and the first terminal and the second terminal may implement networking communication through mutual confirmation of addresses and interfaces, or may communicate with each other through a gateway or a route. Therefore, the pre-run result in the second semantic control instruction may be used as an intermediate result and transmitted by the first terminal to the second terminal, or may be directly sent by the server to the second terminal to invoke the second terminal.

In a possible implementation, the sending the first semantic instruction and the second semantic instruction to the first terminal includes:
sending the first semantic instruction and the second semantic instruction to the first terminal in a semantic representation form.

In this embodiment, the semantic representation form is a machine-readable language representation manner, and the server uses the speech instruction recognition result obtained after the semantic processing as a reply result to the first terminal or the second terminal in the semantic representation form.

Correspondingly, the server may further send the first semantic instruction to the first terminal in the semantic representation form, and for example, the semantic representation form is {skill=switch, target=television, utterance=play the movie Ne Zha}. The server may further send the pre-run result in the second semantic instruction to the second terminal in the semantic representation form, and for example, the semantic representation form of the pre-run result is {skill=play a movie, name=Ne Zha}.

Step S304: Receive the execution command fed back by the second terminal after the second terminal recognizes the second semantic instruction, and send, according to the execution command, service logic corresponding to the second semantic instruction to the second terminal.

In this embodiment, the second semantic instruction includes the target sub-intent and the pre-run result obtained by pre-verifying the target sub-intent. After receiving the second semantic instruction, the second terminal obtains the pre-run result by recognizing the second semantic instruction. The second terminal directly invokes the execution interface of the server based on the pre-run result, and sends the execution command to the server. The server receives the execution command sent by the second terminal, interconnects, according to the execution command, to the service logic corresponding to the second semantic instruction, and sends the service logic to the second terminal device. For example, movie data in the server is invoked, and the movie data is sent to the second terminal as response logic, where the response logic may be {skill=play a movie, name=Ne Zha}. The second terminal executes the corresponding service logic, that is, plays the movie Ne Zha.

In a possible implementation, the sending, according to the execution command, service logic corresponding to the second semantic instruction to the second terminal includes:
3.4: Parse the pre-run result according to the execution command.
3.5: Invoke the service logic based on the parsed pre-run result, and send the service logic to the second terminal in the semantic representation form.

In this embodiment, the server receives the execution command sent by the second terminal, parses the pre-run result of the target sub-intent, invokes, based on the parsed result, the service logic corresponding to the target sub-intent, and sends the service logic to the second terminal in the semantic representation form. For example, the server returns {skill=play a movie, name=Ne Zha} to the second terminal.

It should be noted that a dialog management server corresponding to the first terminal and a dialog management server corresponding to the second terminal may be a same server, or two servers having a same function.

According to the speech control method provided in this application, the server is used as the execution body. The server receives the speech instruction recognition result sent by the first terminal, performs semantic processing on the speech instruction recognition result to obtain the to-be-executed operation information in the speech instruction recognition result, and sends the operation information to the first terminal. The first terminal executes the first semantic instruction in the operation information, and sends the second semantic instruction in the operation information to the second terminal. After the second terminal recognizes the second semantic instruction, the server may directly receive the execution command fed back by the second terminal, invoke, according to the execution command, the service logic corresponding to the second semantic instruction, and send the service logic to the second terminal. In this embodiment, after the second terminal receives the second semantic instruction, the server may directly receive the execution command that is fed back by the second terminal based on task information included in the second semantic instruction, and does not need to perform semantic processing again on the second semantic instruction received by the second terminal. The corresponding service logic may be invoked according to the execution command that is fed back, and be sent to the second terminal through the execution interface. In this way, the processing procedure for the second semantic instruction is omitted, a dialog delay is shortened, and a response time of the dialog system is improved.

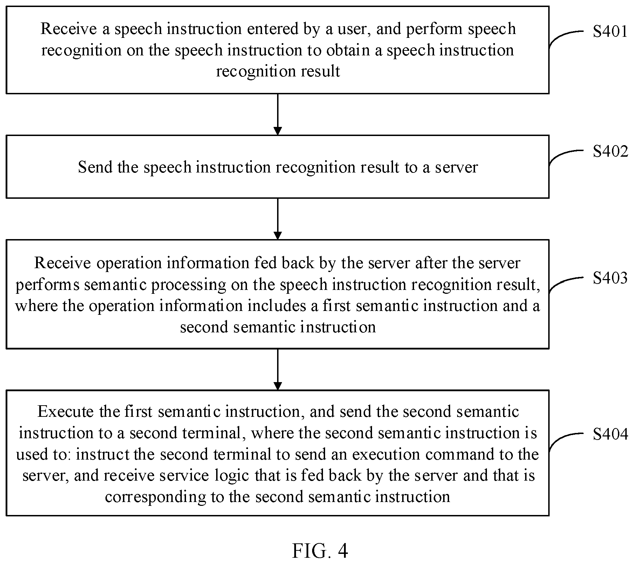

FIG. 4 is a schematic flowchart of a speech control method according to another embodiment of this application. In an embodiment of the speech control method provided in this application, the first terminal in FIG. 1 is used as an execution body. The first terminal may be a device such as a mobile phone, a computer, a tablet, or a sound box. This is not specifically limited herein. A specific implementation principle of the method includes the following steps:
Step S401: Receive a speech instruction entered by a user, and perform speech recognition on the speech instruction to obtain a speech instruction recognition result.
Step S402: Send the speech instruction recognition result to a server.
Step S403: Receive operation information fed back by the server after the server performs semantic processing on the speech instruction recognition result, where the operation information includes a first semantic instruction and a second semantic instruction.
Step S404: Execute the first semantic instruction, and send the second semantic instruction to a second terminal, where the second semantic instruction is used to instruct the second terminal to send an execution command to the server and receive service logic that is fed back by the server and that is corresponding to the second semantic instruction. In some embodiments of this application, a speech assistant may be disposed in the first terminal. The speech assistant receives, by using a microphone, the speech instruction entered by the user, and performs speech recognition ASR on the speech instruction, to obtain the speech instruction recognition result, that is, text information corresponding to the speech instruction. The speech assistant sends the speech instruction recognition result to the server in a wired or wireless manner, and receives the operation information fed back by the server. The operation information may include the first semantic instruction corresponding to the first terminal and the second semantic instruction corresponding to the second terminal. The first terminal executes the first semantic instruction in the operation information, invokes and switches to the second terminal, and sends the second semantic instruction to the second terminal at the same time. The second semantic instruction may include a pre-run result of a target sub-intent in the speech instruction recognition result. The second terminal may recognize the pre-run result in the second semantic instruction, directly send the execution command to the server based on the pre-run result, and invoke an execution interface of the server. The server connects, according to the execution command, to service logic corresponding to the target sub-intent, and feeds back the service logic to the second terminal, so that the second terminal completes the service logic. In this way, a repeated processing process of the server to an utterance of the target sub-intent is omitted, thereby improving a response speed of a target device, shortening a response time of a dialog system, and reducing a delay of human-machine speech interaction.

In a possible implementation, the receiving operation information fed back by the server after the server performs semantic processing on the speech instruction recognition result includes:
receiving response logic fed back by the server for a target intent in the speech instruction recognition result, and receiving the pre-run result fed back by the server for the target sub-intent in the speech instruction recognition result.

In a possible implementation, the first semantic instruction is response logic fed back by the server for the target intent in the speech instruction recognition result, and the second semantic instruction is the pre-run result fed back by the server for the target sub-intent in the speech instruction recognition result and the target sub-intent. Correspondingly, the executing the first semantic instruction, and sending the second semantic instruction to a second terminal includes:
executing the response logic fed back by the server, and sending, to the second terminal, the target sub-intent and the pre-run result that are fed back by the server.

According to this embodiment of this application, when obtaining the response logic fed back by the server based on a first terminal context, the first terminal obtains the pre-run result of the target sub-intent in the speech instruction recognition result, and also sends the pre-run result to the second terminal when invoking the second terminal, so that the second terminal can directly obtain the pre-run result of the target sub-intent in the speech instruction recognition result, and the server does not need to perform a series of semantic processing on the utterance of the target sub -intent, thereby optimizing a data processing procedure of the dialog system, and improving a response speed of the dialog system.

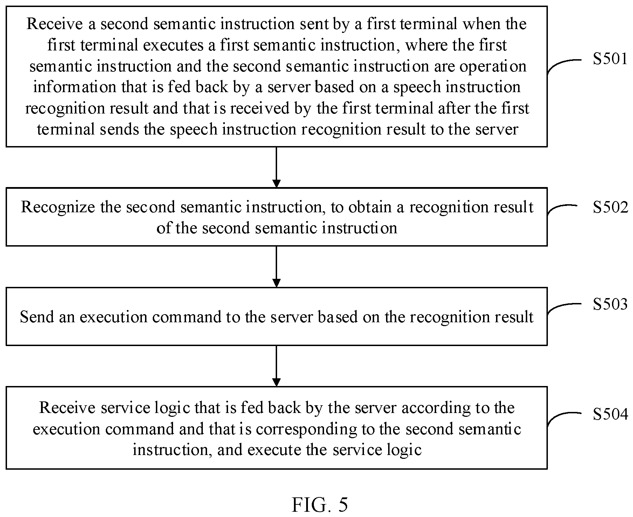

FIG. 5 is a schematic flowchart of a speech control method according to another embodiment of this application. In an embodiment of the speech control method provided in this application, the second terminal in FIG. 1 is used as an execution body. The second terminal may be a device such as a mobile phone, a tablet, a computer, a sound box, or a television. This is not specifically limited herein. A specific implementation principle of the method includes the following steps:
Step S501: Receive a second semantic instruction sent by a first terminal when the first terminal executes a first semantic instruction, where the first semantic instruction and the second semantic instruction are operation information that is fed back by a server based on a speech instruction recognition result and that is received by the first terminal after the first terminal sends the speech instruction recognition result to the server.
Step S502: Recognize the second semantic instruction, to obtain a recognition result of the second semantic instruction. Step S503: Send an execution command to the server based on the recognition result.
Step S504: Receive service logic that is fed back by the server based on the execution command and that is corresponding to the second semantic instruction, and execute the service logic.

In some embodiments of this application, after receiving the second semantic instruction fed back by the server by using the first terminal, the second terminal recognizes the second semantic instruction, to obtain a pre-run result of a target sub-intent in the speech instruction recognition result. According to the pre-run result, semantic recognition processing does not need to be performed on an utterance of the target sub-intent, and an execution command is directly sent to the server to invoke an execution interface of the server, so that the server connects to a corresponding service platform based on the pre-run result, and invokes corresponding service logic. The second terminal receives the service logic fed back by the server, and executes the service logic.

In a possible implementation, the operation information includes response logic fed back by the server for a target intent in the speech instruction recognition result, and the pre-run result fed back by the server for the target sub-intent in the speech instruction recognition result.

Correspondingly, the receiving a second semantic instruction sent by a first terminal when the first terminal executes a first semantic instruction includes:
receiving the target sub-intent and the pre-run result that are sent by the first terminal when the first terminal executes the response logic.

In a possible implementation, the second semantic instruction includes the pre-run result obtained by the server by pre-verifying the target sub-intent in the speech instruction recognition result.

Correspondingly, the recognizing the second semantic instruction, to obtain a recognition result of the second semantic instruction includes:
recognizing the second semantic instruction, to obtain the pre-run result of the target sub-intent.

According to this embodiment of this application, when receiving the pre-run result of the target sub-intent in the speech instruction recognition result, the second terminal may directly invoke the execution interface of the server based on the pre-run result, and does not need to perform semantic recognition processing on the utterance of the target sub-intent. After receiving the execution command of the second terminal, the server connects to the service platform corresponding to the target sub-intent, invokes the corresponding service logic, and feeds back the service logic to the second terminal, so that the second terminal executes the service logic. In this way, a repeated semantic processing procedure on the utterance corresponding to the target sub-intent in the speech instruction recognition result is omitted, and a response speed of a dialog system is improved.

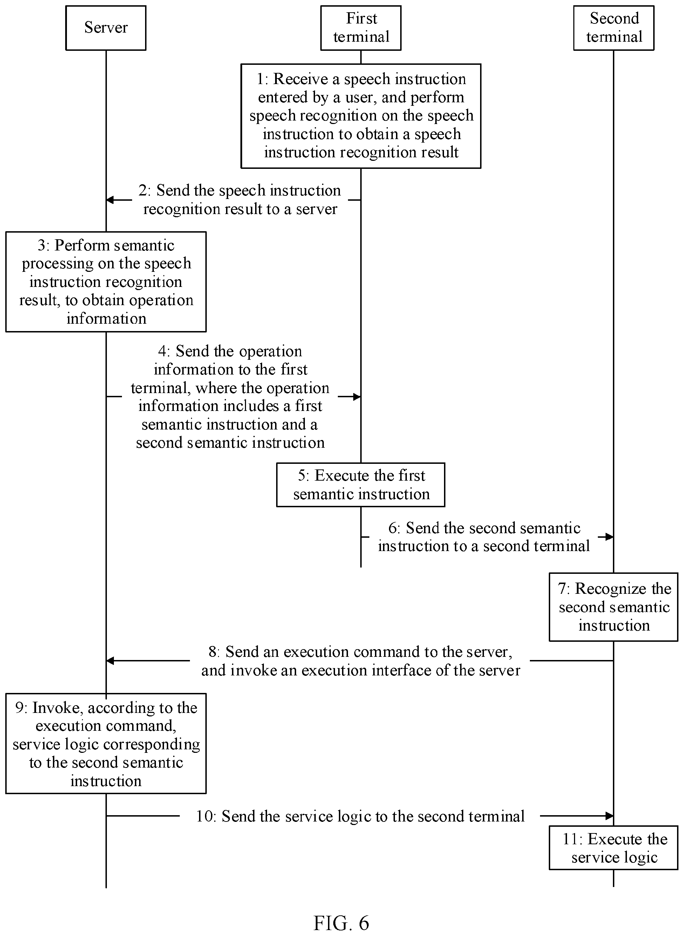

FIG. 6 is a schematic diagram of device interaction of a speech control method according to an embodiment of this application. Cross-device speech control is implemented through multi-device network interconnection. The interaction process includes the following steps:
1: A first terminal receives a speech instruction entered by a user, and performs speech recognition on the speech instruction to obtain a speech instruction recognition result.
2: The first terminal sends the speech instruction recognition result to a server.
3: The server performs semantic processing on the speech instruction recognition result, to obtain operation information.
4: The server sends the operation information to the first terminal, where the operation information includes a first semantic instruction and a second semantic instruction.
5: The first terminal executes the first semantic instruction.
6: The first terminal sends the second semantic instruction to a second terminal.
7: The second terminal recognizes the second semantic instruction.
8: The second terminal sends an execution command to the server, and invokes an execution interface of the server.
9: The server invokes, according to the execution command, service logic corresponding to the second semantic instruction.
10: The server sends the service logic to the second terminal.
11: The second terminal executes the service logic.

An execution principle of steps in this embodiment is the same as that in the foregoing embodiment, and details are not described again.

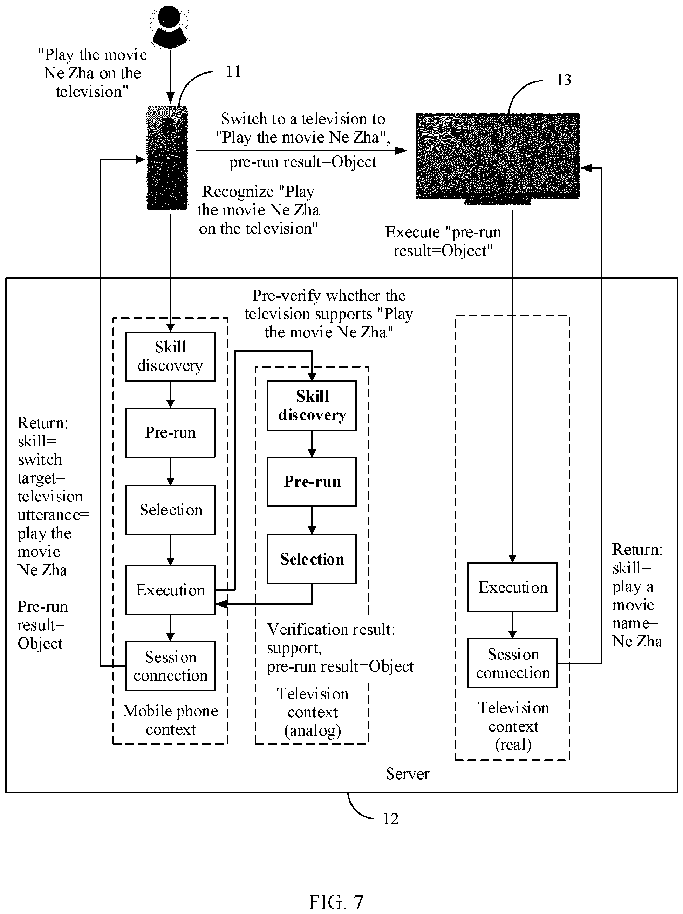

FIG. 7 is a schematic diagram of an application scenario of a speech control method according to an embodiment of this application. An example in which a first terminal is a mobile phone, a server is a dialog management server, and a second terminal is a television is used. All devices are networked, and can communicate with each other through confirmation of an address and an interface.

As shown in the figure, the mobile phone receives a speech instruction "Play the movie Ne Zha on the television" entered by a user, performs speech recognition on the speech instruction, to obtain text information of the speech instruction, and the mobile phone sends the text information to the dialog management server in a wired or wireless manner. The dialog management server performs semantic recognition on "Play the movie Ne Zha on the television" based on a mobile phone context, and determines, by performing skill discovery, pre-run, and selection of an optimal skill "switch", that a target is "television", and an utterance is "Play the movie Ne Zha". When a switching intent is determined, whether the television supports the playing needs to be pre-verified. After a series of processing such as skill discovery, pre-run, and selection is performed based on an analog television context, that a verification result is "support" and a pre-run result is "target object Object" is obtained. The skill "switch", the determined target, "television", and the utterance "Play the movie Ne Zha" are fed back to the mobile phone as response logic. After receiving the response logic, the mobile phone executes a switching instruction, sends "Play the movie Ne Zha" to the television, and sends the pre-run result "Object" to the television. The television recognizes the pre-run result "Object", directly sends an execution command to the dialog management server, and invokes an execution interface of the dialog management server. The dialog management server connects to service logic corresponding to "Play the movie Ne Zha", and feeds back the service logic to the television. The television performs an operation of playing the movie Ne Zha based on the fed-back service logic.

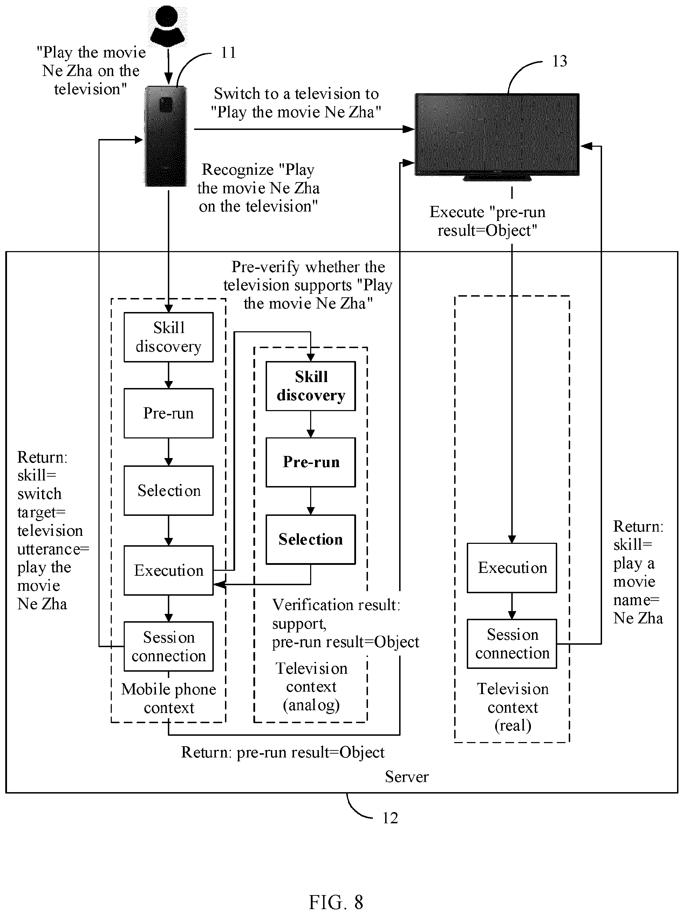

In a possible implementation, FIG. 8 is a schematic diagram of an application scenario of a speech control method according to another embodiment of this application. After performing semantic processing on "Play the movie Ne Zha" based on an analog television context and obtaining a pre-run result, a dialog management server may directly send the pre-run result to a television through a network, and send an utterance "Play the movie Ne Zha" to the television through a mobile phone. The television directly invokes an execution interface of the server based on the pre-run result, and sends an execution command to the dialog management server. The dialog management server connects to service logic corresponding to "Play the movie Ne Zha" and feeds back the service logic to the television. The television performs an operation of playing the movie Ne Zha based on the fed-back service logic.

In another possible implementation, after execution is performed on a server side based on a mobile phone context, response logic corresponding to a target intent and the pre-run result of a target sub-intent are obtained. The server may directly invoke the television, and send the utterance "Play the movie Ne Zha" of the target sub-intent and the pre-run result to the television at the same time. The television recognizes the utterance corresponding to the target sub-intent and the pre-run result, and the television directly invokes the execution interface of the dialog management server based on the pre-run result, and sends the execution command to the dialog management server. The dialog management server connects to the service logic corresponding to "Play the movie Ne Zha" and feeds back the service logic to the television. The television performs the operation of playing the movie Ne Zha based on the fed-back service logic.

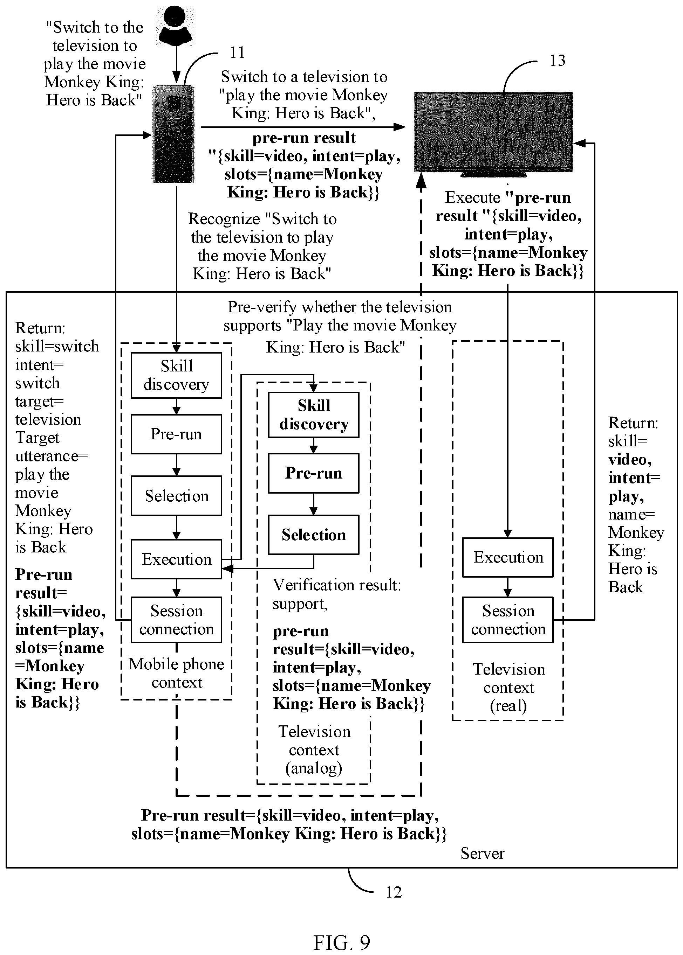

FIG. 9 is a schematic diagram of an application scenario of a speech control method according to another embodiment of this application. An example in which a first terminal is a mobile phone, a server is a dialog management server, and a second terminal is a television is used. All devices are networked, and can communicate with each other through confirmation of an address and an interface.

As shown in FIG. 9, the mobile phone receives a speech instruction " Switch to the television to play the movie Monkey King: Hero is Back" entered by a user, and performs speech recognition on the speech instruction to obtain text information corresponding to the speech instruction. The mobile phone invokes the dialog management server to perform speech recognition on the text information of the speech instruction, so as to recognize that it is a skill and an intent of switching a device, a target device is the television, and a target sub-intent is "Play the movie Monkey King: Hero is Back". The dialog management server verifies whether the television supports "Play the movie Monkey King: Hero is Back", and performs a semantic processing procedure of "skill discovery → pre-run → selection" based on an analog television context, and obtains a verification result: support, and the pre-run result "{skill (skill)=video (play), intent (intent)=play (play), slots (slots)={name (name)=Monkey King: Hero is Back}". The dialog management server returns skill=switch, intent=switch, target=TV, target utterance=Play the movie Monkey King: Hero is Back, and pre-run result={skill=video, intent=play, slots={name=Monkey King: Hero is Back} to the mobile phone. After receiving the result, the mobile phone recognizes that switching is to be performed, invokes the television, and sends the target utterance "Play the movie Monkey King: Hero is Back" and the pre-run result "{skill=video, intent=play, slots={name=Monkey King: Hero is Back}" to the television. After receiving a switching command, the television recognizes the pre-run result, and directly invokes an execution interface of the dialog management server, to execute "{skill=video, intent=play, slots={name=Monkey King: Hero is Back}". After receiving an execution command, the dialog management server interprets "{skill=video, intent=play, slots={name=Monkey King: Hero is Back}", directly invokes corresponding service logic, and returns "skill=video, intent=play, and name=Monkey King: Hero is Back to the television. After receiving the message, the television plays the movie "Monkey King: Hero is Back". According to this embodiment of this application, the first half of the procedure of the target device is reduced, a response delay of a dialog system is significantly shortened (in actual application, the delay may be shortened by more than 50%), so that dialog experience is improved.

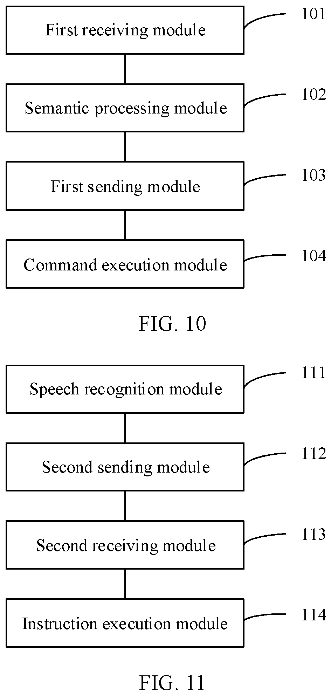

Corresponding to the speech control method described in the foregoing embodiments and the embodiments of the application scenario, FIG. 10 is a structural block diagram of a speech control apparatus according to an embodiment of this application. For ease of description, only a part related to the embodiments of this application is shown. Referring to FIG. 10, the apparatus includes a first receiving module 101, a semantic processing module 102, a first sending module 103, and a command execution module 104. Functions of each module are as follows:
The first receiving module 101 is configured to receive a speech instruction recognition result sent by a first terminal.

The semantic processing module 102 is configured to perform semantic processing on the speech instruction recognition result, to obtain operation information, where the operation information includes a first semantic instruction and a second semantic instruction.

The first sending module 103 is configured to send the first semantic instruction and the second semantic instruction to the first terminal, where the first semantic instruction is used to instruct the first terminal to send the second semantic instruction to a second terminal.

The command execution module 104 is configured to: receive an execution command fed back by the second terminal after the second terminal recognizes the second semantic instruction, and send, according to the execution command, service logic corresponding to the second semantic instruction to the second terminal.

In a possible implementation, the semantic processing module includes:
a semantic recognition submodule, configured to recognize the speech instruction recognition result, to obtain a target intent and a target sub-intent of the speech instruction recognition result; and
a task execution submodule, configured to: pre-verify the target sub-intent based on the target intent, to obtain response logic of the target intent and a pre-run result of the target sub-intent; and use the response logic as the first semantic instruction of the operation information, and use the target sub-intent and the pre-run result as the second semantic instruction of the operation information.

In a possible implementation, the first sending module is further configured to send the first semantic instruction and the second semantic instruction to the first terminal in a semantic representation form.

In a possible implementation, the first sending module includes:
a first submodule, configured to parse the pre-run result according to the execution command; and
a second word module, configured to invoke the service logic based on the parsed pre-run result, and send the service logic to the second terminal in the semantic representation form.

Corresponding to the speech control method described in the foregoing embodiments and the embodiments of the application scenario, FIG. 11 is a structural block diagram of a speech control apparatus according to another embodiment of this application. For ease of description, only a part related to the embodiments of this application is shown.

Referring to FIG. 11, the apparatus includes a speech recognition module 111, a second sending module 112, a second receiving module 113, and an instruction execution module 114. Functions of each module are as follows:
The speech recognition module 111 is configured to: receive a speech instruction entered by a user, and perform speech recognition on the speech instruction to obtain a speech instruction recognition result.

The second sending module 112 is configured to send the speech instruction recognition result to a server.

The second receiving module 113 is configured to receive operation information fed back by the server after the server performs semantic processing on the speech instruction recognition result, where the operation information includes a first semantic instruction and a second semantic instruction.

The instruction execution module 114 is configured to: execute the first semantic instruction; and send the second semantic instruction to a second terminal, where the second semantic instruction is used to instruct the second terminal to send an execution command to the server and receive service logic that is fed back by the server and that is corresponding to the second semantic instruction.

In a possible implementation, the second receiving module is further configured to receive response logic fed back by the server for a target intent in the speech instruction recognition result, and receive a pre-run result fed back by the server for a target sub-intent in the speech instruction recognition result.

In a possible implementation, the first semantic instruction is the response logic fed back by the server for the target intent in the speech instruction recognition result, and the second semantic instruction is the pre-run result fed back by the server for the target sub-intent in the speech instruction recognition result and the target sub-intent. The instruction execution module is further configured to execute the response logic fed back by the server, and send, to the second terminal, the target sub-intent and the pre-run result that are fed back by the server.

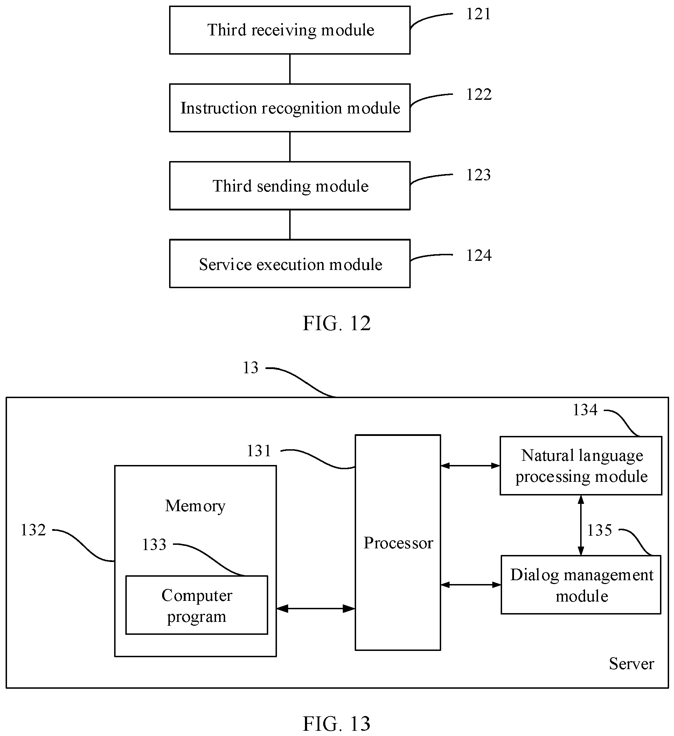

Corresponding to the speech control method described in the foregoing embodiments and the embodiments of the application scenario, FIG. 12 is a structural block diagram of a speech control apparatus according to another embodiment of this application. For ease of description, only a part related to the embodiments of this application is shown.

Referring to FIG. 12, the apparatus includes a third receiving module 121, an instruction recognition module 122, a third sending module 123, and a service execution module 124. Functions of each module are as follows:
The third receiving module 121 is configured to receive a second semantic instruction sent by a first terminal when the first terminal executes a first semantic instruction, where the first semantic instruction and the second semantic instruction are operation information that is fed back by a server based on a speech instruction recognition result and that is received by the first terminal after the first terminal sends the speech instruction recognition result to the server.

The instruction recognition module 122 is configured to recognize the second semantic instruction, to obtain a recognition result of the second semantic instruction.

The third sending module 123 is configured to send an execution command to the server based on the recognition result.

The service execution module 124 is configured to: receive service logic that is fed back by the server based on the execution command and that is corresponding to the second semantic instruction, and execute the service logic.

In a possible implementation, the operation information includes response logic fed back by the server for a target intent in the speech instruction recognition result, and a pre-run result fed back by the server for a target sub-intent in the speech instruction recognition result. The third receiving module is further configured to receive the target sub-intent and the pre-run result that are sent by the first terminal when the first terminal executes the response logic.

In a possible implementation, the second semantic instruction includes a pre-run result obtained by the server by pre-verifying a target sub-intent in the speech instruction recognition result. The instruction recognition module is further configured to recognize the second semantic instruction, to obtain the pre-run result of the target sub-intent.

In a possible implementation, the third sending module is further configured to send the execution command corresponding to the pre-run result to the server based on the recognition result.

According to this embodiment, a speech control method is used. The speech instruction recognition result sent by the first terminal is received, semantic processing is performed on the speech instruction recognition result, to obtain to-be-executed operation information in the speech instruction recognition result, and the operation information is sent to the first terminal. The first terminal executes the first semantic instruction in the operation information, and sends the second semantic instruction in the operation information to the second terminal. After recognizing the second semantic instruction, the second terminal may directly receive the execution command fed back by the second terminal, invoke, according to the execution command, the service logic corresponding to the second semantic instruction, and send the service logic to the second terminal. In this embodiment, after receiving the second semantic instruction, the second terminal may directly receive the execution command that is fed back by the second terminal based on task information included in the second semantic instruction, and does not need to perform semantic processing again on the second semantic instruction received by the second terminal. Corresponding service logic may be invoked based on the execution command that is fed back, and the execution interface is used to send the execution command to the second terminal. In this way, the processing procedure for the second semantic instruction is omitted, a dialog delay is shortened, and a response time of the dialog system is improved.

It may be clearly understood by persons skilled in the art that, for the purpose of convenient and brief description, division of the foregoing function units and modules is used as an example for illustration. In actual application, the foregoing functions can be allocated to different function units and modules and implemented based on a requirement, that is, an inner structure of the apparatus is divided into different function units and modules to implement all or some of the functions described above. Function units and modules in the embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units and modules in the foregoing system, refer to a corresponding process in the foregoing method embodiments. Details are not repeatedly described herein.

FIG. 13 is a schematic structural diagram of a server according to an embodiment of this application. As shown in FIG. 13, the server 13 in this embodiment includes at least one processor 131 (only one processor is shown in FIG. 13), a memory 132, a computer program 133 that is stored in the memory 132 and that can run on the at least one processor 131, a natural language processing module 134, and a dialog management module 135. The memory 132, the natural language understanding module 134, and the dialog management module 135 are coupled to the processor 131. The memory 132 is configured to store the computer program 133. The computer program 133 includes instructions. The processor 131 reads the instructions from the memory 132, so that the server 13 performs the following operations:
receive a speech instruction recognition result sent by a first terminal; perform semantic processing on the speech instruction recognition result, to obtain operation information, where the operation information includes a first semantic instruction and a second semantic instruction; send the first semantic instruction and the second semantic instruction to the first terminal, where the first semantic instruction is used to instruct the first terminal to send the second semantic instruction to a second terminal; and receive an execution command fed back by the second terminal after the second terminal recognizes the second semantic instruction, and send, according to the execution command, service logic corresponding to the second semantic instruction to the second terminal.

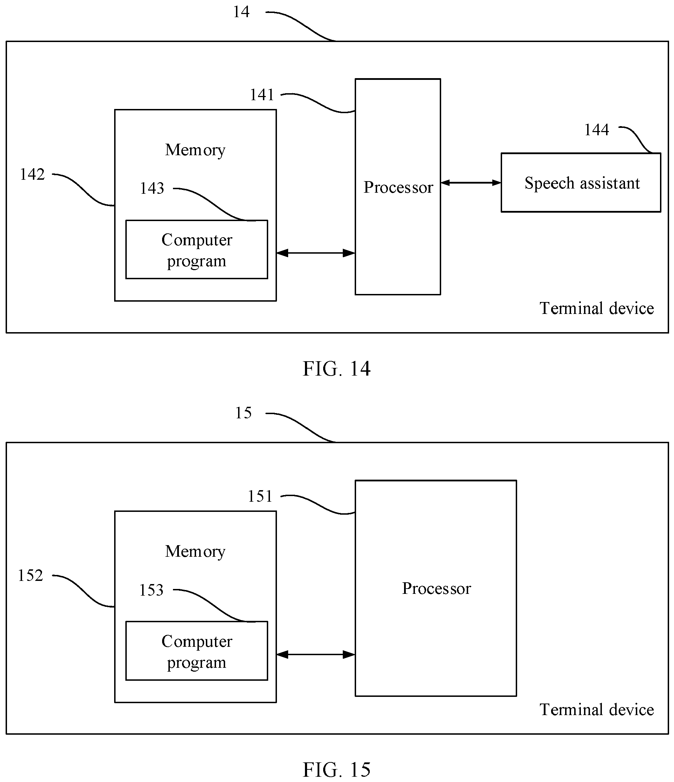

FIG. 14 is a schematic structural diagram of a terminal device according to an embodiment of this application. As shown in FIG. 14, the terminal device 14 in this embodiment includes at least one processor 141 (only one processor is shown in FIG. 14), a memory 142, a computer program 143 that is stored in the memory 142 and that can run on the at least one processor 141, and a speech assistant 144. The memory 142 and the speech assistant 144 are coupled to the processor 141. The memory 142 is configured to store the computer program 143. The computer program 143 includes instructions. The processor 141 reads the instructions from the memory 142, so that the terminal device 14 performs the following operations:
receive a speech instruction entered by a user, and perform speech recognition on the speech instruction to obtain a speech instruction recognition result; send the speech instruction recognition result to a server; receive operation information fed back by the server after the server performs semantic processing on the speech instruction recognition result, where the operation information includes a first semantic instruction and a second semantic instruction; and execute the first semantic instruction, and send the second semantic instruction to a second terminal, where the second semantic instruction is used to instruct the second terminal to send an execution command to the server and receive service logic that is fed back by the server and that is corresponding to the second semantic instruction.

FIG. 15 is a schematic structural diagram of a terminal device according to an embodiment of this application. As shown in FIG. 15, the terminal device 15 in this embodiment includes at least one processor 151 (only one processor is shown in FIG. 15), a memory 152, and a computer program 153 that is stored in the memory 152 and that can run on the at least one processor 151. The memory 152 is coupled to the processor 151. The memory 152 is configured to store the computer program 153. The computer program 153 includes instructions. The processor 151 reads the instructions from the memory 152, so that the terminal device 15 performs the following operations:
receive a second semantic instruction sent by a first terminal when the first terminal executes a first semantic instruction, where the first semantic instruction and the second semantic instruction are operation information that is fed back by a server based on a speech instruction recognition result and that is received by the first terminal after the first terminal sends the speech instruction recognition result to the server; recognize the second semantic instruction, to obtain a recognition result of the second semantic instruction; send an execution command to the server based on the recognition result; and receive service logic that is fed back by the server based on the execution command and that is corresponding to the second semantic instruction, and execute the service logic.

The server 13 may be a device such as a cloud server or a local physical server. The terminal device 14 and the terminal device 15 may be devices such as desktop computers, laptops, palmtop computers, mobile phones, televisions, and sound boxes. The server 13, the terminal device 14, and the terminal device 15 may include, but are not limited to, a processor and a memory. Persons skilled in the art may understand that FIG. 13, FIG. 14, and FIG. 15 are merely examples of the server and the terminal device, and do not constitute a limitation on the server and the terminal device. The server and the terminal device may include more or fewer components than those shown in the figure, or some components may be combined, or different components may be used. For example, the server and the terminal device may further include an input/output device, a network access device, and the like.

The processor may be a central processing unit (Central Processing Unit, CPU). The processor may further be another general-purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory may be an internal storage unit, for example, a hard disk or a memory, of the server 13, the terminal device 14, or the terminal device 15. In some other embodiments, the memory may also be an external storage device, for example, a disposed pluggable hard disk, a smart media card (Smart Media Card, SMC), a secure digital (Secure Digital, SD) card, or a flash card (Flash Card), of the server 13, the terminal device 14, or the terminal device 15. Further, the memory may include not only the internal storage unit but also the external storage device of the server 13, the terminal device 14, or the terminal device 15. The memory is configured to store an operating system, an application, a bootloader (BootLoader), data, and another program, for example, program code of the computer program. The memory may be further configured to temporarily store data that has been output or is to be output.

According to an embodiment of this application, a computer-readable storage medium is further provided. The computer-readable storage medium stores a computer program, the computer program includes instructions, and when the instructions are run on a terminal device, the terminal device is enabled to perform the speech control method. According to an embodiment of this application, a computer program product including instructions is provided. When the computer program product is run on a terminal device, the terminal device is enabled to perform the speech control method according to any one of the possible implementations of the first aspect.

When the integrated unit is implemented in the form of a software function unit and sold or used as an independent product, the integrated unit may be stored in a computer-readable storage medium. Based on such an understanding, all or some of the processes of the method in the embodiments of this application may be implemented by a computer program instructing related hardware. The computer program may be stored in a computer-readable storage medium. When the computer program is executed by the processor, steps of the foregoing method embodiments may be implemented. The computer program includes computer program code. The computer program code may be in a source code form, an object code form, an executable file form, some intermediate forms, or the like. The computer-readable medium may include at least any entity or apparatus that can carry computer program code to a photographing apparatus/terminal device, a recording medium, a computer memory, a read-only memory (ROM, Read-Only Memory), a random access memory (RAM, Random Access Memory), an electrical carrier signal, a telecommunications signal, and a software distribution medium. For example, a USB flash drive, a removable hard disk, a magnetic disk, or an optical disk. In some jurisdictions, the computer-readable medium cannot be the electrical carrier signal or the telecommunications signal according to legislation and patent practices.

In the foregoing embodiments, the description of each embodiment has respective focuses. For a part that is not described in detail or recorded in an embodiment, refer to related descriptions in other embodiments.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In the embodiments provided in this application, it should be understood that the disclosed apparatus/network device and method may be implemented in other manners. For example, the described apparatus/network device embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application, and these modifications and replacements shall fall within the protection scope of this application.

## Claims

1. A speech control method, comprising:
receiving a speech instruction recognition result sent by a first terminal;
performing semantic processing on the speech instruction recognition result, to obtain operation information, wherein the operation information comprises a first semantic instruction and a second semantic instruction;
sending the first semantic instruction and the second semantic instruction to the first terminal, wherein the first semantic instruction is used to instruct the first terminal to send the second semantic instruction to a second terminal; and
receiving an execution command fed back by the second terminal after the second terminal recognizes the second semantic instruction, and sending, according to the execution command, service logic corresponding to the second semantic instruction to the second terminal.

2. The speech control method according to claim 1, wherein the performing semantic processing on the speech instruction recognition result, to obtain operation information comprises:
recognizing the speech instruction recognition result, to obtain a target intent and a target sub-intent of the speech instruction recognition result;
pre-verifying the target sub-intent based on the target intent, to obtain response logic of the target intent and a pre-run result of the target sub-intent; and
using the response logic as the first semantic instruction of the operation information, and using the target sub-intent and the pre-run result as the second semantic instruction of the operation information.

3. The speech control method according to claim 1, wherein the sending the first semantic instruction and the second semantic instruction to the first terminal comprises:
sending the first semantic instruction and the second semantic instruction to the first terminal in a semantic representation form.

4. The speech control method according to claim 2, wherein the sending, according to the execution command, service logic corresponding to the second semantic instruction to the second terminal comprises:
parsing the pre-run result according to the execution command; and
invoking the service logic based on the parsed pre-run result, and sending the service logic to the second terminal in a semantic representation form.

5. A speech control method, comprising:
receiving a speech instruction entered by a user, and performing speech recognition on the speech instruction to obtain a speech instruction recognition result;
sending the speech instruction recognition result to a server;
receiving operation information fed back by the server after the server performs semantic processing on the speech instruction recognition result, wherein the operation information comprises a first semantic instruction and a second semantic instruction; and
executing the first semantic instruction, and sending the second semantic instruction to a second terminal, wherein the second semantic instruction is used to instruct the second terminal to send an execution command to the server and receive service logic that is fed back by the server and that is corresponding to the second semantic instruction.

6. The speech control method according to claim 5, wherein the receiving operation information fed back by the server after the server performs semantic processing on the speech instruction recognition result comprises:
receiving response logic fed back by the server for a target intent in the speech instruction recognition result, and receiving a pre-run result fed back by the server for a target sub-intent in the speech instruction recognition result.

7. The speech control method according to claim 5, wherein the first semantic instruction is response logic fed back by the server for a target intent in the speech instruction recognition result, and the second semantic instruction is a pre-run result fed back by the server for a target sub-intent in the speech instruction recognition result and the target sub-intent; and
correspondingly, the executing the first semantic instruction, and sending the second semantic instruction to a second terminal comprises:
executing the response logic fed back by the server, and sending, to the second terminal, the target sub-intent and the pre-run result that are fed back by the server.

8. A speech control method, comprising:
receiving a second semantic instruction sent by a first terminal when the first terminal executes a first semantic instruction, wherein the first semantic instruction and the second semantic instruction are operation information that is fed back by a server based on a speech instruction recognition result and that is received by the first terminal after the first terminal sends the speech instruction recognition result to the server;
recognizing the second semantic instruction, to obtain a recognition result of the second semantic instruction;
sending an execution command to the server based on the recognition result; and
receiving service logic that is fed back by the server according to the execution command and that is corresponding to the second semantic instruction, and executing the service logic.

9. The speech control method according to claim 8, wherein the operation information comprises response logic fed back by the server for a target intent in the speech instruction recognition result, and a pre-run result fed back by the server for a target sub-intent in the speech instruction recognition result; and
correspondingly, the receiving a second semantic instruction sent by a first terminal when the first terminal executes a first semantic instruction comprises:
receiving the target sub-intent and the pre-run result that are sent by the first terminal when the first terminal executes the response logic.

10. The speech control method according to claim 8, wherein the second semantic instruction comprises a pre-run result obtained by the server by pre-verifying a target sub-intent in the speech instruction recognition result; and
correspondingly, the recognizing the second semantic instruction, to obtain a recognition result of the second semantic instruction comprises:
recognizing the second semantic instruction, to obtain the pre-run result of the target sub-intent.

11. The speech control method according to claim 10, wherein the sending an execution command to the server based on the recognition result comprises:
sending the execution command corresponding to the pre-run result to the server based on the recognition result.

12. A speech control apparatus, comprising:
a first receiving module, configured to receive a speech instruction recognition result sent by a first terminal;
a semantic processing module, configured to perform semantic processing on the speech instruction recognition result, to obtain operation information, wherein the operation information comprises a first semantic instruction and a second semantic instruction;
a first sending module, configured to send the first semantic instruction and the second semantic instruction to the first terminal, wherein the first semantic instruction is used to instruct the first terminal to send the second semantic instruction to a second terminal; and
a command execution module, configured to: receive an execution command fed back by the second terminal after the second terminal recognizes the second semantic instruction, and send, according to the execution command, service logic corresponding to the second semantic instruction to the second terminal.

13. A speech control apparatus, comprising:
a speech recognition module, configured to: receive a speech instruction entered by a user, and perform speech recognition on the speech instruction to obtain a speech instruction recognition result;
a second sending module, configured to send the speech instruction recognition result to a server;
a second receiving module, configured to receive operation information fed back by the server after the server performs semantic processing on the speech instruction recognition result, wherein the operation information comprises a first semantic instruction and a second semantic instruction; and
an instruction execution module, configured to: execute the first semantic instruction; and send the second semantic instruction to a second terminal, wherein the second semantic instruction is used to instruct the second terminal to send an execution command to the server and receive service logic that is fed back by the server and that is corresponding to the second semantic instruction.

14. A speech control apparatus, comprising:
a third receiving module, configured to receive a second semantic instruction sent by a first terminal when the first terminal executes a first semantic instruction, wherein the first semantic instruction and the second semantic instruction are operation information that is fed back by a server based on a speech instruction recognition result and that is received by the first terminal after the first terminal sends the speech instruction recognition result to the server;
an instruction recognition module, configured to recognize the second semantic instruction, to obtain a recognition result of the second semantic instruction;
a third sending module, configured to send an execution command to the server based on the recognition result; and
a service execution module, configured to: receive service logic that is fed back by the server according to the execution command and that is corresponding to the second semantic instruction, and execute the service logic.

15. A server, wherein the server comprises a memory, a processor, a natural language understanding module, and a dialog management module, the memory is configured to store a computer program, the computer program comprises instructions, and when the instructions are executed by the server, the server is enabled to perform the speech control method according to any one of claims 1 to 4.

16. A terminal device, wherein the terminal device comprises a memory, a processor, and a speech assistant, the memory is configured to store a computer program, the computer program comprises instructions, and when the instructions are executed by the terminal device, the terminal device is enabled to perform the speech control method according to any one of claims 5 to 7.

17. A terminal device, wherein the terminal device comprises a memory and a processor, the memory is configured to store a computer program, the computer program comprises instructions, and when the instructions are executed by the terminal device, the terminal device is enabled to perform the speech control method according to any one of claims 8 to 11.

18. A computer storage medium, wherein the computer-readable storage medium stores a computer program, the computer program comprises instructions, and when the instructions are run on a terminal device, the terminal device is enabled to perform the speech control method according to any one of claims 1 to 4, 5 to 7, or 8 to 11.

19. A computer program product comprising instructions, wherein when the computer program product is run on a terminal device, the terminal device is enabled to perform the speech control method according to any one of claims 1 to 4, 5 to 7, or 8 to 11.
